(19) Europäisches Patentamt
European Patent Office
Office européen des brevets

(11) EP 0 696 222 B1

(12) EUROPÄISCHE PATENTSCHRIFT

(45) Veröffentlichungstag und Bekanntmachung des Hinweises auf die Patenterteilung:
**11.12.1996 Patentblatt 1996/50**

(21) Anmeldenummer: **94913593.3**

(22) Anmeldetag: **13.04.1994**

(51) Int. Cl.$^6$: **B01D 15/00**, B01D 53/34, B01J 20/26

(86) Internationale Anmeldenummer:
**PCT/EP94/01146**

(87) Internationale Veröffentlichungsnummer:
**WO 94/25133 (10.11.1994 Gazette 1994/25)**

# (54) FILTERMATERIAL UND VERFAHREN ZUR ENTFERNUNG VON OZON AUS GASEN UND FLÜSSIGKEITEN

FILTER MATERIAL, AND METHOD OF REMOVING OZONE FROM GASES AND LIQUIDS USING THE FILTER MATERIAL

MATERIAU FILTRANT ET PROCEDE PERMETTANT D'EXTRAIRE DE L'OZONE CONTENU DANS DES GAZ ET DES LIQUIDES

(84) Benannte Vertragsstaaten:
**AT BE CH DE DK ES FR GB GR IT LI NL PT SE**

(30) Priorität: **04.05.1993 DE 4314734**

(43) Veröffentlichungstag der Anmeldung:
**14.02.1996 Patentblatt 1996/07**

(73) Patentinhaber: **HOECHST AKTIENGESELLSCHAFT**
**65929 Frankfurt am Main (DE)**

(72) Erfinder:
- **STRUTZ, Heinz**
  **D-61250 Usingen (DE)**
- **FLEISCHER, Dietrich**
  **D-64287 Darmstadt (DE)**
- **KULPE, Jürgen**
  **D-65929 Frankfurt am Main (DE)**
- **SCHLEICHER, Andreas, Dr.**
  **D-65614 Beselich (DE)**

(56) Entgegenhaltungen:
**EP-A- 0 297 744** **EP-A- 0 418 618**
**FR-A- 2 614 553** **US-A- 4 853 735**

- **DATABASE WPI Week 7417, Derwent Publications Ltd., London, GB; AN 74-31636V & JP,A,49 012 894 (SEKISUI) 28. März 1974**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 696 222 B1

## Beschreibung

Die Erfindung betrifft ein Filtermaterial sowie ein Verfahren zur Entfernung von Ozon aus Gasen und Flüssigkeiten, indem der Gasstrom oder eine Flüssigkeit mit einem Filtermaterial aus Polyarylenthioether in Kontakt gebracht wird.

Es ist bekannt, daß bei elektrophotographischen Kopier- und Druckverfahren kleine Mengen von Ozon gebildet werden. Das entstehende Ozon wird von verwendeten Geräten, dies können z. B. Photokopierer und Laserdrucker sein, permanent in die Umgebungsluft abgegeben. Neben der Geruchsbelästigung kann von Ozon auch in geringen Konzentrationen ein gesundheitliches Risiko ausgehen ("Ozone", M. Horváth, Topics in Inorganic and General Chemistry; Monograph 20, Elsevier, Seite 75 ff.)
Um hier Abhilfe zu schaffen, sind eine Vielzahl von Verfahren entwickelt worden, die die Entfernung des Ozons aus dem von derartigen Vorrichtungen freigesetzten Luftstrom beschreiben. Dabei wird das Ozon entweder zerstört, bzw. chemisch oder physikalisch gebunden.
Die Zerstörung des Ozons ist z. B. durch Erhitzen oder durch Wechselwirkung mit einem Metallkatalysator möglich. Bei der thermischen Zerstörung des Ozons sind der Energiebedarf und die hohe Temperatur, die zur vollständigen Ozonzersetzung notwendig sind, nachteilig (JP-A-60 197 223 und JP-A-60 19 115).

Ferner ist bekannt, den Gasstrom durch ein Filter zu leiten, in dem das Ozon katalytisch zersetzt wird (JP-A-58 081 425). Das Basismaterial des Filters ist mit einer oder mehreren Metallverbindungen, Metallen oder Legierungen, z.B. Eisen-, Mangan- oder Nickelverbindungen imprägniert, denen weiterhin eine Verbindung oder ein Metall aus der Gruppe der sogenannten Edelmetalle, z. B. Palladium oder Platin, zugegeben wird. Diese Katalysatoren sind sehr teuer und haben meist nur eine begrenzte Lebensdauer, da solche heterogenen Katalysatoren durch verschiedene Katalysatorgifte schnell desaktiviert werden.

Auch ein Trägermaterial aus Aluminiumoxid oder Aktivkohle, das mit ethylenisch ungesättigten Verbindungen imprägniert ist, die mit dem Ozon reagieren, wird als Filter eingesetzt (DE-A-37 28 802). Nachteilig ist, daß die Verbindungen, z. B. Terpene, je nach Trägermaterial in vielen Fällen flüchtig sind, also in geringen Mengen ausgetragen werden können und somit verloren gehen. Außerdem steht nur ein geringer Teil des Filtergewichtes als aktiver Bestandteil zur Verfügung.

Weiterhin ist ein Filter zur Ozonzersetzung bekannt, das aus einer Faserplatte besteht, deren Fasern einen ozonzersetzenden Katalysator enthalten (JP-A-3 270 718). Diese Fasern, die in einer bevorzugten Ausführungsform porös sind, bestehen aus einem Polymer mit einer der folgenden funktionellen Gruppen, die mit Ozon stark reagieren, z. B. -SH, =S, $-NH_2$, =NH, -CN und -OH. Als ozonzersetzende Katalysatoren werden Metalle wie Gold, Silber, Kupfer, Palladium, Eisen, Nickel, Kobalt und Mangan oder ihre Oxide sowie Tonerde und Kieselgur genannt. Die für die Herstellung des Filters benötigte Faser wird nach einem üblichen Spinnprozeß erhalten, wobei der Katalysator in der Spinnlösung dispergiert und nach dem Spinnen gleichmäßig in der Faser verteilt ist. Durch Zugabe eines zweiten Polymers, das mit dem ersten Polymer eine Phasentrennung hervorruft, und verschiedene Nachbehandlungen des Spinnproduktes erhält man eine poröse Phase, in der die Katalysatorpartikel enthalten sind. Die erhaltenen Fasern werden dann nach üblichen Methoden zu dem Filter konfektioniert. Abgesehen davon, daß die als geeignet angesehenen Polymeren nur en bloc genannt werden - offenbart ist ausschließlich Polyacrylnitril - ist die Herstellung der Filter umständlich und sehr aufwendig.

Aufgabe der Erfindung war es daher, ein Filter und ein Verfahren zur Ozonentfernung zur Verfügung zu stellen, bei denen die genannten Nachteile nicht auftreten.

Die Erfindung betrifft ein Filter auf Polymerbasis zur Entfernung von Ozon aus Gasen und Flüssigkeiten, das aus einem Polyarylenthioether

$$-[(Ar^1)_n-X]_m-[(Ar^2)_i-Y]_j-[(Ar^3)_k-Z]_l-[(Ar^4)_o-W]_p- \qquad (I)$$

besteht, wobei $Ar^1$, $Ar^2$, $Ar^3$, $Ar^4$, W, X, Y und Z unabhängig voneinander gleich oder verschieden sind. Die Indizes n, m, i, j, k, l, o und p sind unabhängig voneinander Null oder ganze Zahlen 1,2,3 oder 4, wobei ihre Summe mindestens 2 ergeben muß, $Ar^1$, $Ar^2$, $Ar^3$ und $Ar^4$ stehen in der Formel (I) für Arylensysteme mit 6 bis 18 C-Atomen,
W, X, Y und Z stellen zweiwertige Verknüpfungsgruppen dar, ausgewählt aus $-SO_2-$, -S-, -SO-, -CO-, -O-, $-CO_2-$, Alkylen- oder Alkylidengruppen mit 1 bis 6, vorzugsweise 1 bis 4 C-Atomen.

Beansprucht wird auch ein Verfahren zur Entfernung von Ozon aus Gasen und Flüssigkeiten, bei dem ein Filter aus einem Polyarylenthioether mit wiederkehrenden Einheiten der Formel (I) als ozonzersetzende Verbindung eingesetzt wird, wobei das Gas oder die Flüssigkeit mit der Oberfläche des Filtermaterials in Kontakt gebracht wird.

Bevorzugt als Polyarylenthioether ist Polyphenylensulfid (PPS) mit der wiederkehrenden Einheit der Formel (II), dessen Herstellungsprozeß z. B. in den US-Patenten 3,354,129, 3,919,177, 4,038,262 und 4,282,347 beschrieben ist.

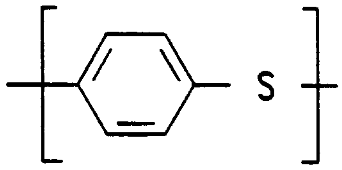

(II)

Das PPS der Formel (II) kann auch bis zu einem Anteil von 30 Mol-% eine 1,2- und/oder 1,3-Verknüpfung am aromatischen Kern aufweisen.

Für die Erfindung sind im allgemeinen Polyarylenthioether geeignet, die ein mittleres Molekulargewicht von 4 000 bis 200 000, vorzugsweise von 10 000 bis 150 000, insbesondere 25 000 bis 100 000, bestimmt durch GPC, aufweisen.

Die Polymere können als Pulver, Fasern, Folien oder Formkörper zur Herstellung eines Filters eingesetzt werden. Durch geeignete Verfahren lassen sich letztere auch mit besonders großer Oberfläche herstellen, beispielsweise mit Gitter- oder Wabenstruktur. Die Pulver besitzen handelsübliche Teilchengrößen, wobei auch Granulate verwendbar sind. Wichtig hierbei ist es, daß das zu behandelnde Gas oder die Flüssigkeit durch das Pulver, beispielsweise in Form eines Festbettes ohne Störung durchgeleitet werden kann. Werden die Polymere als Fasern verwendet, werden diese als Stapelfasern, Nadelfilz, "non woven" Material, Kardenband oder Gewebe eingesetzt. Auch Folien oder Folienschnipsel können in geeigneter Form Verwendung finden.

Der ozonhaltige Gasstrom oder die Flüssigkeit kann bei jeder Temperatur, die unterhalb des Erweichungspunktes der als Filtermaterial eingesetzten Polymeren liegt, gemäß der Erfindung behandelt werden. Im allgemeinen liegen aber die Temperaturen im Bereich von -10 bis + 80 °C, vorzugsweise 0 bis 50 °C.

Die Entfernung von Ozon erfolgt im allgemeinen quantitativ, wobei die Reaktionszeiten von den Strömungsgeschwindigkeiten und der Oberfläche des Filterguts beziehungsweise der Schütthöhe bei Pulvern abhängig ist. Im allgemeinen beträgt die Verweilzeit im Filter 0,1 Sekunden bis 10 Minuten, vorzugsweise 0,5 Sekunden bis 1 Minute. Die Grenzwerte können aber auch überschritten werden.

Bei der Behandlung der eingesetzten Polyarylenthioether mit dem ozonhaltigen Medium werden die Polymere im allgemeinen bis zur Stufe des Polyarylensulfoxids umgesetzt. Erhöht man aber die Temperatur bis unterhalb des Erweichungspunktes der Polymeren, tritt eine vollständige Oxidation zu Sulfon-Brücken ein. Allerdings macht sich bei hohen Temperaturen auch der thermische Zerfalls des Ozons bemerkbar. Die Aufnahmekapazität der Filter gemäß der Erfindung reicht bis zur völligen Oxidation der Sulfid-Brücken. Das erschöpfte Filtermaterial, d. h. das Polyarylensulfoxid bzw. das Polyarylensulfon stellt ein neu gebildetes Polymer dar. Dieses kann erneut, beispielsweise für andere Zwecke wie zur Herstellung von Formkörpern eingesetzt oder regeneriert werden. Die erschöpften Filtermaterialien sind somit voll recyklisierbar und stellen keine Belastung für die Umwelt dar.

Bei der Entfernung des Ozons aus dem Gas- oder Flüssigkeitsstrom werden keine flüchtigen Produkte gebildet.

Das Filtermaterial auf Basis von Polyarylenthioether kann im allgemeinen als unverschnittenes Material eingesetzt werden. Möglich ist aber auch der Zusatz von üblichen Füllstoffen, wie Kreide, Talk, Ton, Glimmer, und/oder faserförmigen Verstärkungsmitteln, wie Glas- und Kohlenstoffasern, Whiskers, sowie weiteren üblichen Zusatzstoffen und Verarbeitungshilfsmitteln, z.B. Gleitmittel, Trennmittel, Antioxidantien und UV-Stabilisatoren.

Das Filter gemäß der Erfindung kann bei allen ozonhaltigen Gasströmen und Flüssigkeiten verwendet werden. So findet es beispielsweise Anwendung bei der Beseitigung des bei der Sterilisation verwendeten oder aus einem Kopiergerät entstandenen Ozons, ferner zur Entfernung und Unschädlichmachung von Ozon in Flüssigkeiten. Weitere Anwendungsgebiete sind möglich.

Beispiele

Das in den Beispielen 1 und 2 als Ausgangsstoff benötigte Ozon wurde mit einem handelsüblichen Ozonerzeuger hergestellt, der mit reinem Sauerstoff betrieben wurde.

Die Ozonkonzentration wurde mit einem Meßgerät auf UV-Photometerbasis bestimmt. Anschließend wurde das Ozon-Sauerstoff-Gemisch mit Luft oder Argon bis zu den genannten Konzentrationen verdünnt. Die zur Verdünnung eingesetzten Gase wurden getrocknet und danach der Gasstrom geteilt. Ein Teil wurde durch ein Leerrohr, ein anderer durch ein entsprechendes, mit dem Filtermaterial gefülltes vertikales Rohr geleitet. Um das Polymer aufnehmen zu können, war das Glasrohr am unteren Ende mit einer porösen Glasplatte (Fritte) verschlossen. Die Strömungen wurden so reguliert, daß pro Zeiteinheit gleiche Volumina durch die beiden Rohre strömten. Die Ozonkonzentration wurde mit schwefelsaurer Kaliumjodid-Lösung in bekannter Weise ("Ozone", M. Horvath, L. Bilitzky and J. Hüttner, Elsevier, 1985, S. 81 ff. (Topics in Inorganic and General Chemistry); Collection of Monograph ed. R. J. H. Clark (Monographie Nr. 20))

bestimmt. Das durch das Ozon freigesetzte Jod wurde auf die eingeleitete Ozonmenge umgerechnet.

1) In ein Glasrohr mit einem Durchmesser von ca. 25 mm, das am unteren Ende mit einer Glasfritte verschlossen war, wurden 6 g eines Polyphenylensulfid-Pulvers (Tg. 92°C, mittleres Molgewicht 30 000, Schüttdichte 0,462 g/cm$^3$) eingefüllt. Die Schütthöhe betrug ca. 26 mm. Durch dieses Pulverbett wurde der ozonhaltige Gasstrom geleitet. Dabei wurden nacheinander die Strömungsgeschwindigkeiten und die Ozonkonzentration eingestellt. Gemessen wurde über den jeweils angegebene Zeitraum (Tab. 1).

Tabelle 1

| Strömungsgeschwindigkeit (l/h) | Zeit (min) | Ozonkonzentration (mg/m$^3$) | Ozonkonzentration nach Filter (mg/m$^3$) |
|---|---|---|---|
| 9,0 | 300 | 710 | 0 |
| 9,0 | 60 | 5347 | 0 |
| 9,5 | 60 | 252 | 0 |
| 20 | 120 | 19,5 | 0 |

In keinem Fall wurde aus der Kaliumjodid-Lösung Jod abgeschieden, d. h. die Entfernung des Ozons war quantitativ.

2) Beispiel 1 wurde wiederholt mit einem Glasrohr mit ca. 10 mm Innendurchmesser und einer Glasfritte. Schütthöhe des PPS-Pulvers ca. 4 cm, entsprechend 1,5 g Pulver. Durch das gebildete Filter wurde der Gasstrom mit folgenden Strömungsgeschwindigkeiten bzw. Ozonkonzentrationen durchgeleitet (Tabelle 2).

Tabelle 2

| Strömungsgeschwindigkeit (l/h) | Zeit (min) | Ozonkonzentration (mg/m$^3$) | Ozonkonzentration nach Filter (mg/m$^3$) |
|---|---|---|---|
| 9,0 | 110 | 500 | 0 |
| 9,0 | 190 | 383 | 0 |
| 10,0 | 70 | 105 | 0 |

Auch hier ließ sich nach dem Filter kein Ozon nachweisen.

3 bis 13) In den Beispielen 3 bis 13 werden verschiedene Filtertypen unter variablen Bedingungen untersucht (Tabelle 3). Die Ozon-Erzeugung im Bereich bis 1 mg/m$^3$ wurde mit Hilfe von UV-Licht durchgeführt, während die Erzeugung höherer Konzentrationen im Bereich von 1 bis 50 000 mg/m$^3$ über die stille elektronische Entladung erfolgte. Der mit Ozon angereicherte Luftstrom wurde je nach Bedarf mit anderen Komponenten versetzt (Luftfeuchte) und über ein senkrecht montiertes, beidseitig mit Stopfen verschlossenes Glasrohr mit 2 Glasfritten geleitet. In dem Glasrohr befand sich das Ozon bindende Mittel. Bei Verwendung von Vlies oder Watte als Filtermaterial wurde anstelle eines Glasrohres ein Filterhalter eingesetzt. Die gereinigte Luft am Ausgang des Filters wurde mit Hilfe eines handelsüblichen Ozon-Analysators (Messung nach UV-Prinzip) analysiert. Zusätzlich erfolgte eine qualitative Messung eventueller Ozon-Konzentrationen durch eine Kaliumjodid-Lösung.

14 und 15) Die Beispiele 14 und 15 beschreiben die Entfernung von Ozon aus Flüssigkeiten (Tabelle 4). Die Versuchsapparatur bestand aus einem 1-Liter-Glaskolben, in den über eine Glasfritte Ozon-haltiger Sauerstoff eingeleitet wurde. Der Gehalt an gelöstem Ozon wurde indirekt über Redox-Elektroden bestimmt und mit Literaturdaten korreliert. Über eine Pumpe wurde die ozonhaltige Flüssigkeit aus dem Glaskolben über eine Adsorberstrecke (Glasrohr mit Granulat gefüllt, an den Enden mit Glasfritten verschlossen) gepumpt und anschließend wieder in den Glaskolben zurückgeführt, wo eine erneute Anreicherung mit Ozon erfolgte. Der Ozon-Gehalt wurde vor und hinter der Adsorber- bzw. Filterstrecke gemessen. Als Nullabgleich für die Redox-Potential-Messung wurde eine nur mit Sauerstoff begaste Lösung herangezogen, deren Redox-Potential bei 320 mV lag.

Tabelle 3

| Beispiel | 3 | 4 | 5 | 6 | 7 | 8 | 9 | 10 | 11 | 12 | 13 |
|---|---|---|---|---|---|---|---|---|---|---|---|
| Material | PPS | PPS | PPS | PPS | PPS | PPS | PPS | PPS | PPS | PPS | PPS |
| Mol-Gewicht | 30000 | 40000 | 90000 | 30000 | 30000 | 30000 | 30000 | 30000 | 30000 | 40000 | 90000 |
| Filtertyp | Pulver | Pulver | Feinst-pulver | Pulver | Pulver | Pulver | Pulver | Pulver | Stapel-faser (Watte) | Vlies | Vlies |
| Korngröße [µm] | 100-2000 | 100-2000 | 100-200 | 100-2000 | 500 | 1000 | 100-2000 | 100-2000 | | | |
| Trägergas | Luft | Luft | Luft | Luft | Luft | Luft | Sauer-stoff | Sauer-stoff | Luft | Luft | Luft |
| rel. Luftfeuchte [%] | 70 | 70 | 70 | 0 | 70 | 70 | 0 | 0 | 70 | 70 | 70 |
| Volumenstrom (Gas) [$m^3/h$] | 0,11 | 0,11 | 0,11 | 0,11 | 0,11 | 0,11 | 0,08 | 0,08 | 0,11 | 0,11 | 0,11 |
| Ozon (Eingang) [ppb]<br>= [$mg/m^3$] | 330<br>0,66 | 330<br>0,66 | 330<br>0,66 | 330<br>0,66 | 330<br>0,66 | 330<br>0,66 | 500*<br>1000 | 20000*<br>40000 | 330<br>0,66 | 330<br>0,66 | 330<br>0,66 |
| Ozon (Ausgang) [ppb] | 0 | 0 | 0 | 0 | 0 | 0 | 0 | 0 | 0 | 0 | 0 |
| Versuchsdauer [h] | 24 | 24 | 24 | 24 | 24 | 24 | 8 | 8 | 4 | 4 | 24 |
| Anströmfläche [$cm^2$] | 2,5 | 2,5 | 2,5 | 2,5 | 2,5 | 2,5 | 2,5 | 2,5 | 12,6 | 12,6 | 12,6 |
| Filterlänge [cm] | 2,0 | 2,0 | 2,0 | 2,0 | 2,0 | 2,0 | 30 | 30 | 10 | 0,5 | 1,0 |
| Gewicht [g] | 2,1 | 2,0 | 2,1 | 1,95 | 2,1 | 1,95 | 29,7 | 29,9 | 9 | 0,65 | 1,4 |
| Temperatur [°C] | 20 | 20 | 20 | 20 | 20 | 20 | 20 | 80 | 20 | 20 | 20 |

*ppm

Tabelle 4

| Beispiel | 14 | 15 |
|---|---|---|
| Material | PPS | PPS |
| Mol-Gewicht | 30000 | 30000 |
| Filtertyp | Pulver | Pulver |
| Korngröße [µm] | 500 | 1000 |
| Flüssigkeit | ozonhaltiges Wasser | ozonhaltiges Wasser |
| Volumenstrom (Flüssigkeit) [l/h] | 20 | 20 |
| Redoxpotential/Ozongehalt [mV] [mg/l] | 1150 /10 | 1150/10 |
| Ozon (Ausgang) [mV] [mg/l] | 320/0 | 320/0 |
| Versuchsdauer [h] | 2 | 2 |
| Filterlänge [cm] | 20 | 20 |
| Filterdurchmesser [cm] | 1,8 | 1,8 |
| Ozon-Konzentration (Trägergas) [mg/m$^3$] | 40000 | 40000 |
| Temperatur [°C] | 20 | 20 |

## Patentansprüche

**1.** Filtermaterial auf Polymerbasis zur Entfernung von Ozon aus Gasen und Flüssigkeiten, dadurch gekennzeichnet, daß es aus einem Polyarylenthioether mit wiederkehrenden Einheiten der Formel

$$-[(Ar^1)_n-X]_m-[(Ar^2)_i-Y]_j-[(Ar^3)_k-Z]_l-[(Ar^4)_o-W]_p- \quad (I)$$

besteht, worin $Ar^1$, $Ar^2$, $Ar^3$, $Ar^4$, W, X, Y und Z unabhängig voneinander gleich oder verschieden sind, die Indizes n, m, i, j, k, l, o und p unabhängig voneinander Null oder ganze Zahlen 1,2,3 oder 4 sind, wobei ihre Summe mindestens 2 ist, $Ar^1$, $Ar^2$, $Ar^3$ und $Ar^4$ Arylensysteme mit 6 bis 18 C-Atomen sind und W, X, Y und Z zweiwertige Verknüpfungsgruppen darstellen, ausgewählt aus $-SO_2-$, -S-,-SO-, -CO-, -O-, $-CO_2-$ oder Alkylen- oder Alkylidengruppen mit 1 bis 6 C-Atomen.

**2.** Verfahren zur Entfernung von Ozon aus Gasen und Flüssigkeiten, dadurch gekennzeichnet, daß ein Filter aus einem Polyarylenthioether mit wiederkehrenden Einheiten der Formel

$$-[(Ar^1)_n-X]_m-[(Ar^2)_i-Y]_j-[(Ar^3)_k-Z]_l-[(Ar^4)_o-W]_p- \quad (I)$$

worin $Ar^1$, $Ar^2$, $Ar^3$, $Ar^4$, W, X, Y und Z unabhängig voneinander gleich oder verschieden sind, die Indizes n, m, i, j, k, l, o und p unabhängig voneinander Null oder ganze Zahlen 1,2,3 oder 4 sind, wobei ihre Summe mindestens 2 ist, $Ar^1$, $Ar^2$, $Ar^3$ und $Ar^4$ Arylensysteme mit 6 bis 18 C-Atomen sind und W, X, Y und Z zweiwertige Verknüpfungsgruppen darstellen, ausgewählt aus $-SO_2-$, -S-, -SO-,-CO-, -O-, $-CO_2-$ oder Alkylen- oder Alkylidengruppen mit 1 bis 6 C-Atomen, als Ozon entfernende Verbindung eingesetzt wird, wobei das Gas oder die Flüssigkeit mit der Oberfläche des Filtermaterials in Kontakt gebracht wird.

**3.** Filtermaterial nach Anspruch 1 oder Verfahren nach Anspruch 2, dadurch gekennzeichnet, daß Polyphenylensulfid mit wiederkehrenden Einheiten der Formel

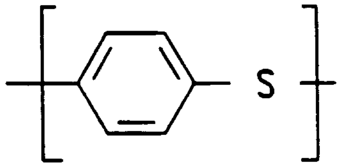

(II)

eingesetzt wird.

4. Filtermaterial nach Anspruch 1 oder Verfahren nach Anspruch 2 und 3, dadurch gekennzeichnet, daß das mittlere Molekulargewicht 4000 bis 200000 beträgt.

5. Verfahren nach einem oder mehreren der Ansprüche 2 bis 4, dadurch gekennzeichnet, daß die Behandlungstemperatur unterhalb des Erweichungspunktes des als Filtermaterial eingesetzten Polymeren liegt.

6. Verfahren nach Anspruch 5, dadurch gekennzeichnet, daß die Behandlungstemperatur -10 bis + 80 °C, vorzugsweise 0 bis 50 °C beträgt.

7. Verfahren nach einem oder mehreren der Ansprüche 2 bis 6, dadurch gekennzeichnet, daß die Behandlungszeit 0,1 Sekunden bis 10 Minuten, vorzugsweise 0,5 Sekunden bis 1 Minute beträgt.

8. Verwendung des Filtermaterials nach Anspruch 1 zur Herstellung eines Ozon entfernenden Filters für Gase und Flüssigkeiten.

9. Verwendung nach Anspruch 8 in Form von Pulver, Fasern, Folien oder Formkörpern.

**Claims**

1. A polymer-based filter material for removing ozone from gases and liquids, which is composed of a polyarylene thioether having repeating units of the formula

$$-[(Ar^1)_n-X]_m-[(Ar^2)_i-Y]_j-[(Ar^3)_k-Z]_l-[(Ar^4)_o-W]_p- \quad (I)$$

in which $Ar^1$, $Ar^2$, $Ar^3$, $Ar^4$, W, X, Y and Z, independently of each other, are identical or different, the indices n, m, i, j, k, l, o and p, independently of each other, are zero or integers 1, 2, 3 or 4, their sum being at least 2, $Ar^1$, $Ar^2$, $Ar^3$ and $Ar^4$ are arylene systems having 6 to 18 carbon atoms, and W, X, Y and Z are divalent linking groups, selected from $-SO_2-$, -S-, -SO-, -CO-, -O-, $-CO_2-$, or alkylene groups or alkylidene groups having 1 to 6 carbon atoms.

2. A process for removing ozone from gases and liquids, which comprises using a filter made of a polyarylene thioether having repeating units of the formula

$$-[(Ar^1)_n-X]_m-[(Ar^2)_i-Y]_j-[(Ar^3)_k-Z]_l-[(Ar^4)_o-W]_p- \quad (I)$$

in which $Ar^1$, $Ar^2$, $Ar^3$, $Ar^4$, W, X, Y and Z, independently of each other, are identical or different, the indices n, m, i, j, k, l, o and p, independently of each other, are zero or integers 1, 2, 3 or 4, their sum being at least 2, $Ar^1$, $Ar^2$, $Ar^3$ and $Ar^4$ are arylene systems having 6 to 18 carbon atoms, and W, X, Y and Z are divalent linking groups, selected from $-SO_2-$, -S-, -SO-, -CO-, -O-, $-CO_2-$, or alkylene groups or alkylidene groups having 1 to 6 carbon atoms, as ozone-removing compound, the gas or the liquid being brought into contact with the surface of the filter material.

3. The filter material as claimed in claim 1 or the process as claimed in claim 2, wherein poly(phenylene sulfide) having repeating units of the formula

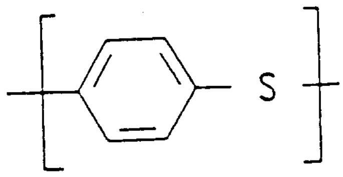

(II)

is used.

4. The filter material as claimed in claim 1 or the process as claimed in claim 2 and 3, wherein the mean molecular weight is 4,000 to 200,000.

5. The process as claimed in one or more of claims 2 to 4, wherein the treatment temperature is beneath the softening point of the polymer used as filter material.

6. The process as claimed in claim 5, wherein the treatment temperature is -10 to +80°C, preferably 0 to 50°C.

7. The process as claimed in one or more of claims 2 to 6, wherein the treatment time is 0.1 second to 10 minutes, preferably, 0.5 second to 1 minute.

8. Use of the filter material as claimed in claim 1 for the preparation of an ozone-removing filter for gases and liquids.

9. The use as claimed in claim 8, in the form of powder, fibers, films or moldings.

**Revendications**

1. Matière filtrante à base de polymère pour l'élimination de l'ozone à partir de gaz et de liquide caractérisée en ce qu'elle est constituée d'un thioéther de polyarylène avec des motifs répétitifs de formule :

$$-[(Ar^1)_n-X]_m-[(Ar^2)_i-Y]_j-[(Ar^3)_k-Z]_l-[(Ar^4)_o-W]_p- \quad (I)$$

dans laquelle
$Ar^1$, $Ar^2$, $Ar^3$, $Ar^4$, W, X, Y et , indépendamment les uns des autres, sont identiques ou différents. Les indices n, m, i, j, k, l, o et p sont, indépendamment les uns des autres, 0 ou des nombres entiers 1, 2, 3 ou 4, leur somme devant être au moins 2, $Ar^1$, $Ar^2$, $Ar^3$ et $Ar^4$ dans la formule I représentent des systèmes d'arylènes avec 6 à 18 atomes de carbone, et
W, X, Y et Z représentent des groupes liants bivalents, pris parmi $-SO_2-$, -S-, -SO-, -CO-, -O-, $-CO_2-$, alkylène ou alkylidène avec 1 a 6 atomes de carbone.

2. Procédé pour l'élimination de l'ozone à partir de gaz et de liquides caractérisé en ce qu'on utilise un filtre en thioéther de polyarylène avec des motifs répétitifs de formule

$$-[(Ar^1)_n-X]_m-[(Ar^2)_i-Y]_j-[(Ar^3)_k-Z]_l-[(Ar^4)_o-W]_p- \quad (I)$$

dans laquelle
$Ar^1$, $Ar^2$, $Ar^3$, $Ar^4$, W, X, Y et Z, indépendamment les uns des autres, sont identiques ou différents. Les indices n, m, i, j, k, l, o et p sont indépendamment les uns des autres 0 ou des nombres entiers 1, 2, 3 ou 4, leur somme devant être au moins 2, $Ar^1$, $Ar^2$, $Ar^3$ et $Ar^4$ dans la formule I représentent des systèmes d'arylènes avec 6 à 18 atomes de carbone, et
W, X, Y et Z représentent des groupes liants bivalents, pris parmi $-SO_2-$, -S-, -SO-, -CO-, -O-, $-CO_2-$, alkylène ou alkylidène avec 1 à 6 atomes de carbone, en tant que composé éliminant l'ozone, en mettant en contact le gaz ou le liquide avec la surface de la matière filtrante.

3. Matière filtrante selon la revendication 1 ou procédé selon la revendication 2, caractérisé en ce qu'on utilise un sulfure de polyphénylène comportant des motifs répétitifs de formule

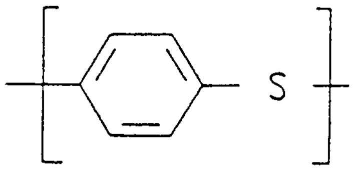

(II)

4. Matière filtrante selon la revendication 1 ou procédé selon la revendication 2 et 3, caractérisé en ce qu'elle a un poids moléculaire moyen de 4 000 à 200 000.

5. Procédé selon l'une ou plusieurs des revendications 2 à 4 caractérisé en ce que la température de traitement est inférieure au point de ramollissement du polymère utilisé comme matière filtrante.

6. Procédé selon la revendication 5 caractérisé en ce que la temperature de traitement est de -10 à +80°C, de préférence de 0 à 50°C.

7. Procédé selon une ou plusieurs des revendications 2 à 6 caractérisé en ce que la durée de traitement est de 0,1 seconde à 10 minutes, de préférence de 0,5 seconde à 1 minute.

8. Utilisation de la matière filtrante selon la revendication 1, pour la préparation d'un filtre éliminant l'ozone à partir de gaz et de liquides.

9. Utilisation selon la revendication 8 sous forme de poudres, de fibres, de feuilles ou de corps façonnés.